# EUROPÄISCHE PATENTANMELDUNG

(11) **EP 4 617 751 A1**
(43) Veröffentlichungstag der Anmeldung: **17.09.2025**
(21) Anmeldenummer: 24163499.7
(22) Anmeldetag: 14.03.2024
(51) Int. Cl.: G02B 6/44

(54) **ANSCHLUSSBOX FÜR GLASFASERN MIT ÜBERLÄNGENABLAGE**

(71) Anmelder: Hauff-Technik GRIDCOM GmbH, 73494 Rosenberg (DE)
(72) Erfinder: Krause, David, 86150 Augsburg (DE); Laumer, Peter, 82131 Gauting (DE); Mayr, Martin, 82395 Untersöchering (DE); Bäuerle, Martin, 73492 Rainau-Saverwang (DE); Himmelsbach, Daniel, 70192 Stuttgart (DE)
(74) Vertreter: Szynka Smorodin Patentanwälte Partnerschaft mbB

(57) **Zusammenfassung**

Die Erfindung betrifft eine Glasfaser-Anschlussbox mit einem Gehäuse und einem Anschlussbereich darin, welcher Spleißstellenablagen und/oder Patchstellen aufweist, wobei unter dem Anschlussbereich eine Überlängenablage für einen vollständigen, durch die Anschlussbox durchgehenden Glasfaser-Kabelstrang vorgesehen ist.

## Beschreibung

Die Erfindung betrifft eine Glasfaser-Anschlussbox und ihre Verwendungen.

Glasfasern (oder "Lichtwellenleiter") sind fortschrittliche Signalträger und in zunehmendem praktischem Einsatz. Insbesondere werden mehr und mehr Gebäude mit Glasfaseranschlüssen zur Datenübertragung versehen. Dabei kommen Kabelstränge mit einer größeren Zahl einzelner, jeweils ummantelter Glasfaserleitungen an, wobei die ummantelten Einzelleitungen im Folgenden als Kabel bezeichnet werden. Der Kabelstrang (in diesem Sinn mit einer Anzahl Kabel darin) ist einerseits ebenfalls ummantelt und natürlich können zum Beispiel bei der Erdverlegung auch viele solche Kabelstränge zu noch stärkeren Leitungen zusammengefasst sein, die ihrerseits im Alltag auch oft als Kabel bezeichnet werden, im Folgenden aber nicht gemeint sind.

Wenn "Abnehmer", also Geräte und Anschlüsse für Geräte in Büros, Wohnungen, Produktionsflächen und dergleichen, mit einem Glasfasernetz verbunden werden, wird typischerweise ein Gebäudeanschluss erstellt, möglicherweise auch ein Anschluss für einen Gebäudeteil, je nach Anschlusszahl und Dimensionen. Hier sind Glasfaser-Anschlussboxen gebräuchlich, in denen einzelne Kabel aus einem Kabelstrang individuell angeschlossen werden, sei es für neue Anschlüsse oder auch zur Änderung bestehender Anschlüsse.

Grundsätzlich sind dabei Steckverbindungen und im Vergleich eher auf Dauer angelegte Spleißstellen im Einsatz. Für Steckverbindungen sind Aufnahmen gebräuchlich, die im Folgenden als Kupplungen bezeichnet werden. In eine solche Kupplung können miteinander zu verbindende Steckelemente eingeführt werden, werden darin gehalten und stellen damit den Anschluss der jeweiligen Kabel aneinander sicher. Man spricht auch von Patchstellen. Spleißstellen sind vergleichsweise empfindlich und werden in der Regel durch eine Spleißschutzvorrichtung umfasst und damit gehalten und geschützt, mit welcher Spleißschutzvorrichtung sie in eigens hierfür vorgesehenen Ablagen, also Plätzen zur Fixierung, abgelegt werden können. Oft werden aus dem Kabelstrang eingehende Kabel über eine solche Spleißstelle an sogenannte Pigtail-Kabel angeschlossen, die nur innerhalb der Anschlussbox verlaufen und an ihrem der Spleißstelle entgegengesetzten Ende ein Einsteckelement für eine Patchstelle aufweisen.

Gerade bei Gebäudeanschlüssen werden für eine gewisse Zahl solcher einzelner Verbindungsstellen Anschlussboxen mit einem Gehäuse benutzt, welches typischerweise einen Deckel und ein Unterteil aufweist und typischerweise für eine Wandmontage an einer vertikalen Wand vorgesehen ist. Solche Anschlussboxen bestehen typischerweise aus Kunststoff, insbesondere aus Spritzgussteilen. Davon zu unterscheiden sind Verteilerschränke, insbesondere aus Metall, oft mit Glastüren, in denen viel größere Zahlen von Anschlüssen in Stapeln von übereinander oder nebeneinander liegenden Modulen untergebracht sind. Mit einer Anschlussbox ist im Folgenden weder ein solcher Verteilerschrank noch das Gehäuse eines Modulstapels oder eines Moduls darin gemeint, sondern eine eigenständige Anschlussbox mit einer maximalen Anschlusszahl von zum Beispiel bis vorzugsweise bis höchstens 288 Patchstellen und/oder für bis zu höchstens 576 Spleißstellen (bezogen auf die angeschlossene Zahl von Einzelfasern). Verteilerschränke sind deutlich größer. Kleinere Anschlussboxen sind natürlich auch gemeint..

Das Gehäuse einer solchen Anschlussbox dient primär dem Schutz vor mechanischen Beeinträchtigungen, etwa unbefugtem Zugriff oder unbeabsichtigten Beschädigungen, dem Schutz vor Schmutz, insbesondere Staub, und in vielen Fällen auch einem gewissen Feuchtigkeitsschutz, zum Beispiel gegen Spritzwasser, jedenfalls im montierten Zustand.

Solche Anschlussboxen werden von spezialisierten Herstellern in verschiedenen Varianten angeboten und sind dabei mit verschiedenen Einbauteilen ausgestattet. Diese sind ausgelegt zum Halten, Führen, geordneten Ablegen von Überlängen von Kabeln und auch zum organisierten Halten von Spleißstellen, Kupplungen und gegebenenfalls weiteren Elementen wie Splittern, Filtern, Weichen etc.

Auf dieser Grundlage liegt der Erfindung die Aufgabe zugrunde, eine vorteilhafte Anschlussbox und vorteilhafte Verwendungen zur Individualisierung der Anschlussbox vorzuschlagen.

Erfindungsgemäß wird diese Aufgabe gelöst durch eine Anschlussbox, die in einem Gehäuse einen Anschlussbereich und darunter ein Bodenteil mit einer speziellen Überlängenablage aufweist. In dieser Überlängenablage können relativ dicke Glasfaserkabel mit einer jeweiligen Stärke von mindestens 0,5 mm abgelegt werden, wobei als Untergrenze 0,8 mm, 1,0 mm, 1,2 mm und 1,5 mm zunehmend bevorzugt sind. Von solchen Kabeln sollen mindestens zehn gemeinsam als Überlänge ablegbar sein (und für jedes Kabel dabei mindestens ein Umlauf). Hier sind Untergrenzen von 20, 30, 40, 50, 60, 70 und 80 Kabeln von z. B. 0,9 mm Stärke zunehmend bevorzugt.

Andererseits sind besonders dicke (Strang-) Kabel hier vorzugsweise nicht gemeint, nämlich Kabel von über 3 mm, vorzugsweise über 2 mm oder über 1,5 mm. Bei bevorzugten Ausgestaltungen der erfindungsgemäßen Anschlussbox gibt es hierfür andere Möglichkeiten, vergleiche weiter unten.

Der in einem allgemeinen Sinn so bezeichnete Anschlussbereich in der Anschlussbox dient für Kabelanschlüsse, und zwar mit Spleißstellen, Patchstellen oder einer Kombination. Dieser Anschlussbereich liegt über dem Bodenteil mit der Überlängenablage. Zum Zugang zu der Überlängenablage darunter kann es daher nötig sein, eine Anschlussvorrichtungen tragende Struktur anzuheben, hochzuklappen, zu verschieben oder anderweitig Zugang durch eine Bewegung einer Innenstruktur der Anschlussbox zu schaffen oder zu verbessern.

Ein bevorzugter Fall betrifft ein Aufnahmeteil für mindestens eine klappbare Spleißkassette in dem Anschlussbereich. Es kann sich bei dem Aufnahmeteil zum Beispiel um eine Gelenkaufnahme zum lösbaren Montieren der mindestens einen Spleißkassette handeln, etwa zum Einschnappen der Kassette in das Aufnahmeteil oder umgekehrt. Vorzugsweise nimmt das Aufnahmeteil eine Mehrzahl und besonders bevorzugter Weise einen Stapel übereinanderliegender klappbarer Spleißkassetten auf.

Die Begriffe "unter" und "übereinander" beziehen sich hier auf eine Lage der Anschlussbox mit horizontaler Orientierung der großen Fläche eines Unterteils, sodass ein Deckel der Anschlussbox nach oben abgehoben oder hochgeklappt werden kann. Bei der üblichen Wandmontage der Anschlussbox findet dementsprechend eine Drehung um 90° statt, weil typischerweise das Unterteil an die Wand angelegt und daran befestigt wird.

Die Spleißkassetten haben jeweils eine Spleißstellenablage, vorzugsweise eine Mehrzahl, und außerdem eine eigene Überlängenablage für ein zu einer Spleißstelle gehörendes Kabel. Vorzugsweise werden zum Zugang zu dem Bodenteil und damit zu der weiter oben behandelten Überlängenablage alle angebrachten Spleißkassetten hochgeklappt und vorzugsweise muss kein weiteres Teil bewegt werden, vergleiche das Ausführungsbeispiel.

Da die Spleißkassetten Überlängenablagen für typischerweise dünne Einzelfasern aufweisen, die zu den abgelegten Spleißstellen gehören, ist die verfügbare Höhe auf einer Spleißkassetten in dem Stapel erheblich kleiner als die verfügbare Höhe der Überlängenablage in dem Bodenteil. Dementsprechend wird keine Bauhöhe verschwendet bzw. können viele Spleißkassetten verwendet werden. Eine typische Stärke für die erwähnten Einzelfasern liegt in der Größenordnung von zum Beispiel 0,2 bis 0,25 mm.

Die größere verfügbare Höhe in dem Bodenteil kann über die relativ starken Kabeln gerecht werdende Überlängenablage hinaus auch andere vorteilhafte Nutzungen ermöglichen. Insbesondere kann in dem Bogenteil eine Aufnahmeeinrichtung für größere Bauteile im Vergleich zu den Spleißstellen (einschließlich Spleißschutzvorrichtungen) in den Spleißkassetten vorgesehen sein, insbesondere für Filter, Splitter und dergleichen.. Solche Bauteile haben eine Größe von mindestens 2, vorzugsweise mindestens 3 mm Kantenlänge (kürzere Kante) oder Durchmesser. Typische Längen liegen bei 30 bis 50 mm.

Ansonsten kann die Filter-/Splitter-Aufnahmeeinrichtung in ähnlicher Weise mit der Überlängenablage in dem Bodenteil zusammenwirken wie dies die Spleißstellenablagen in den Spleißkassetten mit den dortigen Überlängenablage tun. Es können nämlich die zu den aufgenommenen Bauteilen gehörenden Kabel jeweils in der benachbarten Überlängenablage abgelegt werden/sein.

Eine weitere günstige Möglichkeit betrifft die Aufnahme nicht genutzter Steckverbindungselemente, insbesondere mit daran hängenden (Pigtail-) Kabeln. Es gibt dann also in dem Bodenteil einen Pigtail-Kabel-Vorratsraum, wobei die Kabel selbst dabei in die (eigentlich überdimensionierte) Überlängenablage des Bodenteils abgelegt werden können.

Der Bodenteil und vorzugsweise außerdem der Aufnahmeteil sind nicht zwingend integraler Bestandteil des Gehäuses der Anschlussbox selbst. Vorzugsweise handelt es sich bei dem Aufnahmeteil um einen integralen Bestandteil eines in ein Unterteil des Gehäuses eingesetzten oder einsetzbaren Bodenteils. In dieser Weise kann das Gehäuse einfacher hergestellt werden und können auch verschiedene Materialien zur jeweiligen Optimierung genutzt werden. Außerdem sind unterschiedliche Bodenteile im selben Gehäusetyp oder umgekehrt möglich.

Eine vorteilhafte Ausführungsform der Erfindung sieht eine weitere Überlängenablage für relativ starke Kabel vor, und zwar außerhalb des Bodenteils, nämlich zwischen dem Bodenteil und dem Gehäuse, insbesondere seitlich daneben oder, weniger bevorzugt, auch darunter. Hier können Überlängen von zum Beispiel Strangkabeln abgelegt werden, und zwar insbesondere mit einer Mehrzahl Bündel mit jeweils einer Mehrzahl Einzelfasern (vorzugsweise mindestens drei Bündel mit mindestens jeweils sechs Einzelfasern). Zum Beispiel kann ein eingehendes Strangkabel mit zum Beispiel acht Bündeln mit jeweils zum Beispiel zwölf Fasern unvollständig für Anschlüsse in der Anschlussbox genutzt werden, zum Beispiel nur hinsichtlich ein oder zwei Bündeln in dem Strang. Mit Rücksicht auf die notwendige verfügbare Länge für diese benutzten Bündel ist es dann sehr praktisch, den restlichen ungenutzten Strang, also beispielsweise die verbleibenden sechs oder sieben Bündel, in der beschriebenen Weise abzulegen. Typische Dimensionen der Kabel liegen bei über 0,8 mm Durchmesser, vorzugsweise mindestens 1 mm, 1,2 mm, 1,4 mm oder sogar 1,6 mm Durchmesser. Auch 2 mm starke Kabel können vorkommen. Vorzugsweise ist dort Platz für mindestens 10, besonders bevorzugter Weise mindestens 20, 30, 40 oder sogar mindestens 50 Kabel mit z. B. 1,2 mm Stärke.

Eine weitere Ausgestaltung sieht eine innere Montageplatte in dem Gehäuse der Anschlussbox vor. Dabei handelt es sich um einen Teil der Anschlussbox, das zusätzliche Flächen für das Führen oder Halten von Kabeln oder Demontage von Einbauteilen zur Verfügung stellt. Vorzugsweise ist diese Montageplatte annähernd so groß wie die Anschlussbox selbst. Bevorzugt deckt sie mindestens 60 %, vorzugsweise 65 % oder sogar 70 %, des (in der Bestückungsposition in Draufsicht) verfügbaren Flächeninhalts des Innenraums des Gehäuseunterteils ab. Es kann sich insoweit um eine Art inneren Deckel handeln.

Diese Montageplatte kann auf zumindest einer Seite, vorzugsweise auf beiden Seiten je zumindest eine weitere Überlängenablage für Kabel aufweisen. Solche Überlängenablagen sind wegen der Mindestkrümmungsradien der Kabel im Vergleich zu vielen anderen Einrichtungen relativ groß, sodass es günstig sein kann, in anderen Bereichen der Anschlussbox in dieser Form Platz zu schaffen.

Ferner kann die Montageplatte (als innerer Deckel) in einer geschlossenen Klappposition bestimmte Bereiche schützen, vorzugsweise Spleißstellenablagen, und zum Zugriff darauf aufgeklappt werden. Im Sinn der bereits behandelten freien Individualisierbarkeit der Anschlussbox kann die Montageplatte außerdem mindestens einen austrennbaren Bereich aufweisen, sodass der Nutzer zwischen der Verdeckung eines bestimmten Bereichs (in der heruntergeklappten Position der Montageplatte) und dessen Zugänglichkeit wählen kann.

Die Anschlussbox kann mit einem Zubehörteile-Satz kombiniert sein oder werden, der vorzugsweise insbesondere Einbauteile zur Montage in der Anschlussbox umfasst. Insbesondere können hier z. B. Kupplungen für Steckverbindungen oder Kupplungshalter dafür in Frage kommen, wobei im Folgenden für die Kupplungen und Kupplungshalter zusammen von "Kupplungseinrichtungen" die Rede ist. Mit solchen Zubehör- und Einbauteilen kann eine Anschlussbox vom Anwender individualisiert werden und insoweit kann die Lagerhaltung beim Hersteller und/oder beim Anwender auf eine kleinere Zahl von Anschlussboxen und auch Zubehörteile-Sätzen beschränkt werden. Insbesondere können die Kupplungseinrichtungen nach Position und auch Orientierung in verschiedenen Positionen in der Anschlussbox montierbar sein.

Die Kupplungen und damit auch die fertigen Steckverbindungen können in Kombinationen gegeben sein, etwa als Duplexkupplungen. Außerdem kann ein Kupplungshalter eine Mehrzahl Einfach- oder Duplexkupplungen nebeneinander oder übereinander vorsehen. Insbesondere kann eine Matrix als Kupplungshalter vorgesehen sein, in welcher Kupplungen übereinander und nebeneinander montierbar sind (oder bereits integriert vorliegen). Gegenüber den mehrere Kupplungen kombinierenden Kupplungshaltern bietet eine solche Matrix eine besondere Flexibilität. Vorzugsweise ist sie für ein Leitungsrichtung senkrecht zu der Leitungsrichtung der erwähnten Durchführungen vorgesehen, vergleiche das Ausführungsbeispiel.

Zur Verbesserung von Zugangsmöglichkeiten kann die Matrix klappbar montierbar oder montiert sein, wobei sie z. B. in einer hochgeklappten Position nutzbar ist und anderenfalls weggeklappt werden kann. Das kann insbesondere dann vorteilhaft Platz schaffen, wenn Positionen genutzt werden, die auf Leitungsdurchführungen in der Gehäusewand ausgerichtet sind, vergleiche das Ausführungsbeispiel.

Eine weitere günstige Ausgestaltung der Erfindung sieht vor, dass der Einbauteile-Satz als ein einstückiges Kombinationsteil vorgesehen ist, in dem eine Mehrzahl Einbauteile zusammenhängen. Die Einbauteile können dann aus dem Kombinationsteil abgetrennt werden, z. B. abgebrochen oder abgeschnitten werden, wenn sie montiert werden sollen. Sie sind aber bis zu diesem Zeitpunkt verliersicher und übersichtlich gehalten. Außerdem lässt sich ein solches Kombinationsteil z. B. mit Spritzguss besonders günstig herstellen. Das Kombinationsteil kann dabei z. B. einen Rahmen aufweisen, innerhalb dessen eine im Wesentlichen zweidimensionale Anordnung von Einbauteilen mit dünnen Übergangsstellen zum Abtrennen vorgesehen ist, vergleiche das Ausführungsbeispiel. Ein solches Kombinationsteil kann einem Einbauteilegitter ähneln.

Vorzugsweise ist die Zahl der integrierten Kombinationsteile klein, besonders bevorzugt höchstens zwei und im günstigsten Fall genau eines (natürlich pro Einbaubox). Im Fall einer Mehrzahl von Kombinationsteilen können diese natürlich verschieden sein. Außerdem schließt dieser Aspekt der Erfindung nicht aus, dass weitere Einbauteile außerhalb des Kombinationsteils vorgesehen sind, wie im Folgenden noch für einige besondere Fälle erläutert wird.

Vorteilhafterweise kann das oder können die Kombinationsteile in dem Gehäuse befestigbar sein, bspw. schnappend mit einem anderen Teil des Gehäuses oder in dem Gehäuse verbindbar sein, wobei das Kombinationsteil im befestigten Zustand vorzugsweise drehbar ist. Damit ist es bei Arbeiten nicht oder weniger im Weg. In der befestigten Situation ist das Kombinationsteil selbst unverlierbar und "aufgeräumt". Möglicherweise wird das Kombinationsteil erst nach oder bei der Individualisierung der Anschlussbox darin befestigt, aber nicht in dieser Situation vom Hersteller ausgeliefert (oder bevorratet).

Neben den bereits erwähnten Kupplungseinrichtungen können im Einbauteile-Satz, insbesondere im Kombinationsteil, auch noch andere Elemente enthalten sein, z. B. Klemmteile für Glasfaserkabel oder Gehäusezusatzteile, etwa ein Schlossblech (ein Kunststoff-Hilfselement im Ausführungsbeispiel) für den Fall einer Schlossmontage im Gehäuse beinhalten. Außerdem sind auch gar nicht selbst für den Einbau vorgesehene Hilfsteile möglich, z. B. ein Werkzeug zur vereinfachten Demontage von Steckverbindern in Kupplungen.

Die Erfindung betrifft nicht nur die beschriebene Anschlussbox, sondern auch verschiedene Verwendungen, bei denen die erwähnten Überlängenablagen tatsächlich für ihren Zweck eingesetzt werden. Das gilt natürlich auch in entsprechenden Kombinationen.

Im Folgenden wird die Erfindung anhand eines Ausführungsbeispiels erläutert, dessen Einzelheiten sich grundsätzlich auf alle Anspruchskategorien beziehen.

Im Einzelnen zeigen:
- Figur 1: eine perspektivische Ansicht einer erfindungsgemäßen Anschlussbox mit einem geöffneten Gehäuse und einem in ein Unterteil des Gehäuses eingelegten Bodenteil;
- Figur 2: eine analoge perspektivische Ansicht, wobei eine Montageplatte auf dem Bodenteil angebracht ist;
- Figur 3: eine analoge Ansicht, wobei auf der Montageplatte ein Kombinationsteil mit einem Einbauteile-Satz angebracht ist;
- Figur 4: eine Seitenansicht der Anschlussbox aus Figur 1, wobei in einem von dem Bodenteil nach links oben hochragenden Aufnahmeteil Spleißkassetten gelenkig aufgenommen sind und in Figur 4 hochgeklappt dargestellt sind (dabei sind in Figur 4 vordere Seitenwandteile des Gehäuseunterteils aus darstellerischen Gründen weggelassen);
- Figur 5: den Deckel der Anschlussbox, der in den Figuren 1-4 hochgeklappt dargestellt ist, einzeln und von außen bzw. oben in perspektivischer Darstellung;
- Figur 6: das Unterteil der Anschlussbox einzeln, insbesondere ohne eingesetztes Bodenteil;
- Figur 7a: das Bodenteil der Anschlussbox einzeln in Figur 1 entsprechender perspektivischer Darstellung und zur plastischeren Sichtbarkeit mit Grauschattierungen;
- Figur 7b: eine zu Figur 7a identische Darstellung, jedoch ohne Grauschattierungen;
- Figur 8: die Montageplatte aus Figur 2 und 3 einzeln und in abweichender Perspektive sowie ohne Kombinationsteil;
- Figur 9a: das Kombinationsteil aus Figur 3 einzeln und in ähnlicher Perspektive, und zwar zur plastischeren Darstellung grauschattiert;
- Figur 9b: die Darstellung der Figur 9a, jedoch ohne Grauschattierung;
- Figur 10: die Situation aus Figur 3 in anderer Perspektive;
- Figur 11: eine zu Figur 10 analoge Darstellung, jedoch unter Weglassung der Montageplatte aus Figur 10 und mit alternativer Befestigung des Kombinationsteils an dem Aufnahmeteil für die Spleißkassetten;
- Figur 12: die Montageplatte aus Figur 8 in Draufsicht, wobei ein Teil weggebrochen ist;
- Figur 13: eine Anschlussbox mit im Vergleich zu den Figuren 1-4 sowie 10 und 11 abweichendem Innenaufbau in Figur 1 entsprechender perspektivischer Darstellung;
- Figur 14: perspektivisch ein Einzelteil des Innenaufbaus aus Figur 13;
- Figur 15: das Bodenteil aus den Figuren 7 mit darin montierten Einzelteilen und einer beispielhaften Kabelführung;
- Figur 16: eine ähnliche Darstellung wie Figur 15, jedoch mit anderen montierten Einzelteilen und einer anderen beispielhaften Kabelführung;
- Figur 17: eine Draufsicht auf das Bodenteil der Anschlussbox mit beispielhaft eingezeichneter Kabelführung;
- Figur 18: eine Unteransicht zu Figur 17;
- Figur 19: eine weitere Aufsicht auf das Bodenteil mit einer weiteren beispielhaften Kabelführung;
- Figur 20: eine perspektivische Ansicht des Unterteils und des darin eingesetzten Bodenteils der Anschlussbox bei hochgeklappter Montageplatte zur Erläuterung einer weiteren beispielhaften Kabelführung; und
- Figur 21: eine Ansicht analog zu Figur 20, jedoch mit heruntergeklappter Montageplatte und noch einer beispielhaften Kabelführung.

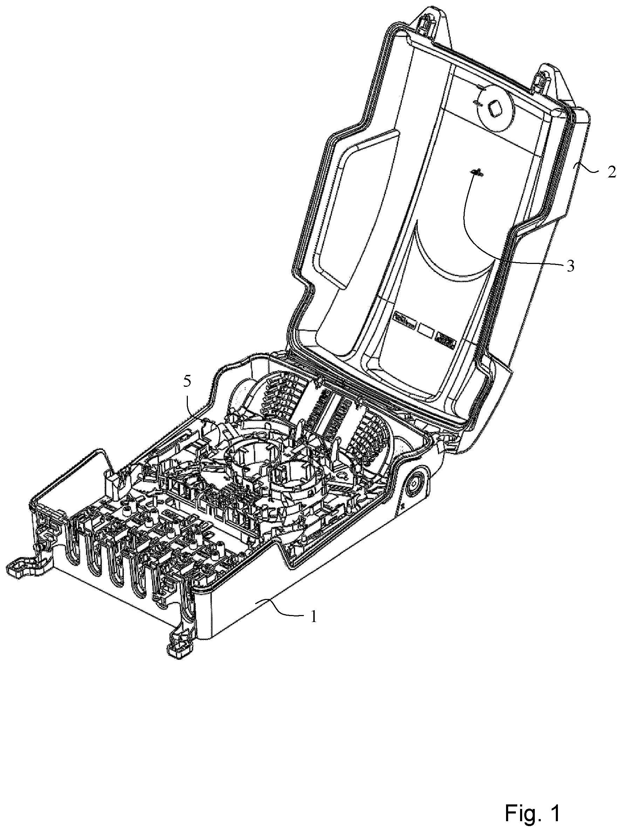

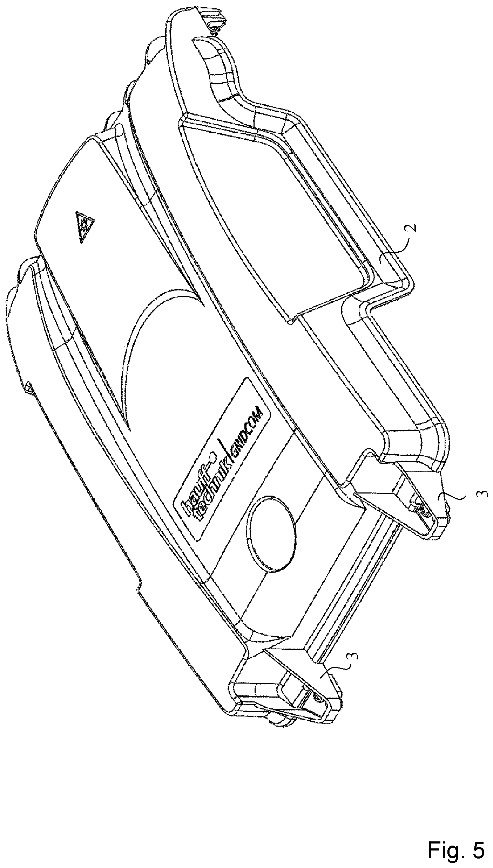

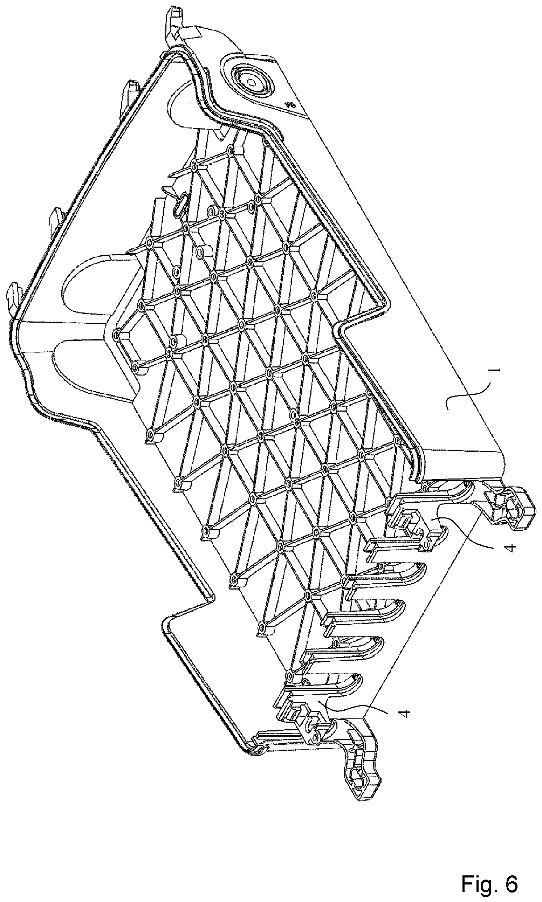

Die erfindungsgemäße Anschlussbox für Glasfaseranschlüsse in den Figuren 1-4 weist ein Gehäuse auf, dass aus einem Unterteil 1 gemäß Figur 6 und einem Deckel 2 gemäß Figur 5 besteht. Diese können an der in den Figuren 5 und 6 hinteren rechten Seite rastend in eine Gelenkverbindung miteinander gebracht werden, sodass der Deckel 2 auf- und zuklappbar ist. Die Figuren 1-4 und andere zeigen den aufgeklappten Zustand des Deckels 2.

Zur Erleichterung der Darstellung wird hier eine horizontale Ausrichtung des Unterteils 1 angenommen, die aber in der praktischen Anwendung nicht zwingend ist. Insbesondere kann dieses mit seiner in den Figuren 1-4 und 6 nach unten weisenden Seite auch an einer Wand montiert werden, sodass der Deckel 2 dann aus einer geschlossenen vertikalen Position über eine horizontale Position hinaus aufgeklappt werden kann und muss, um Zugang zum Innenraum der Anschlussbox zu erhalten.

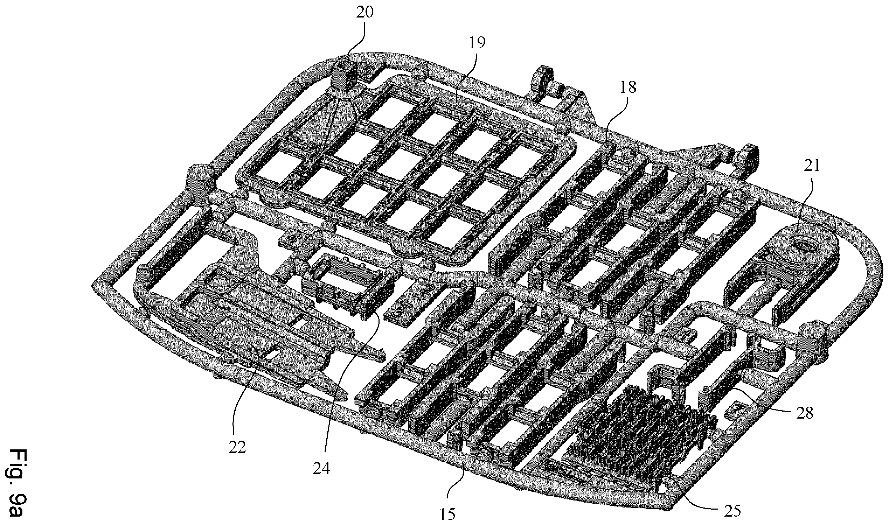

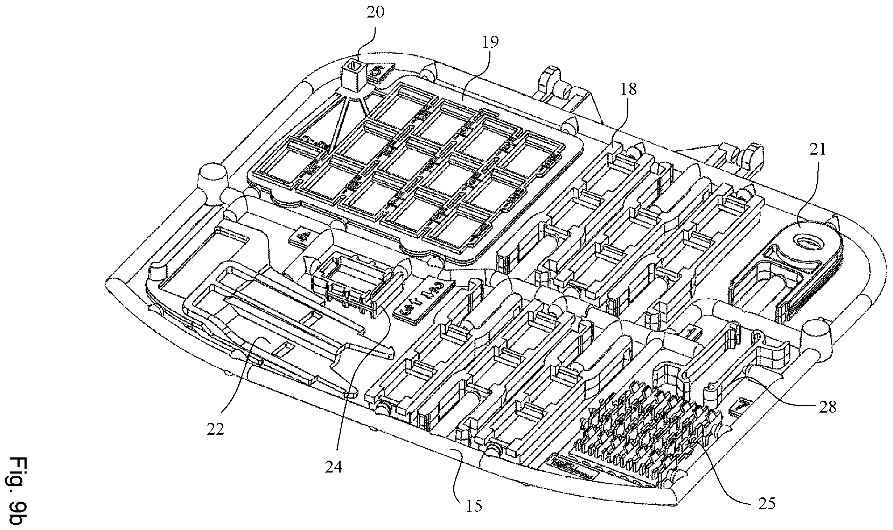

Im geschlossenen Zustand können Deckel 2 und Unterteil 1 auch über ein Schloss miteinander verriegelt werden, bei diesem Ausführungsbeispiel ist das optional. Das Schloss kann in dem in Figur 5 links vorne sichtbaren kreisförmigen Feld in dem Deckel 2 in einer (durch Ausbrechen eines hierzu vorgesehenen Teils herzustellenden) Öffnung montiert werden, ist aber an sich nicht gezeigt. Es schließt mit einem Riegel gegen ein in Zusammenhang mit den Figuren 9 noch erläutertes Kunststoff-Schließblech 22. Außerdem kommen die Vorsprünge 3 des Deckels 2 im geschlossenen Zustand zur Deckung mit den Vorsprüngen 4 des Unterteils 1 und es können hier Verschraubungen oder Verplombungen vorgenommen werden.

Im geschlossenen Zustand schützt die Anschlussbox vor allem von mechanischen Beschädigungen oder unbefugten Zugriffen auf den Innenraum. Im geschlossenen Zustand besteht ferner ein gewisser Feuchtigkeits- und Nässeschutz. Insbesondere ist das Unterteil 1 aus Figur 6 nach unten hin geschlossen; das dargestellte Gitter ist also eine Versteifung. Das Gitter weist an den Kreuzungspunkten (zunächst geschlossene) Stellen zum Anschrauben, z. B. auf eine Wand, auf. An den sich berührenden Kanten von Unterteil 1 und Deckel 2 können in bei diesem Beispiel deckelseitige Nuten Dichtungen eingelegt werden und jedenfalls greifen Vorsprünge am Unterteil in diese Nuten ein. Außerdem bieten die ungefähr U-förmigen Öffnungen in der nach links unten weisenden Wand des Unterteils 1 die Möglichkeit, Kabelabdichtungen anzubringen. Die in Figur 6 links vorne gut sichtbaren Montagearme und ein nicht sichtbarer, aber ähnlicher mittiger Montagearm rechts hinten erlauben außerdem eine Montage des Unterteils 1 ohne innere Öffnungen in dem Unterteil 1 zur Wandseite, also mit besserem Feuchtigkeitsschutz.

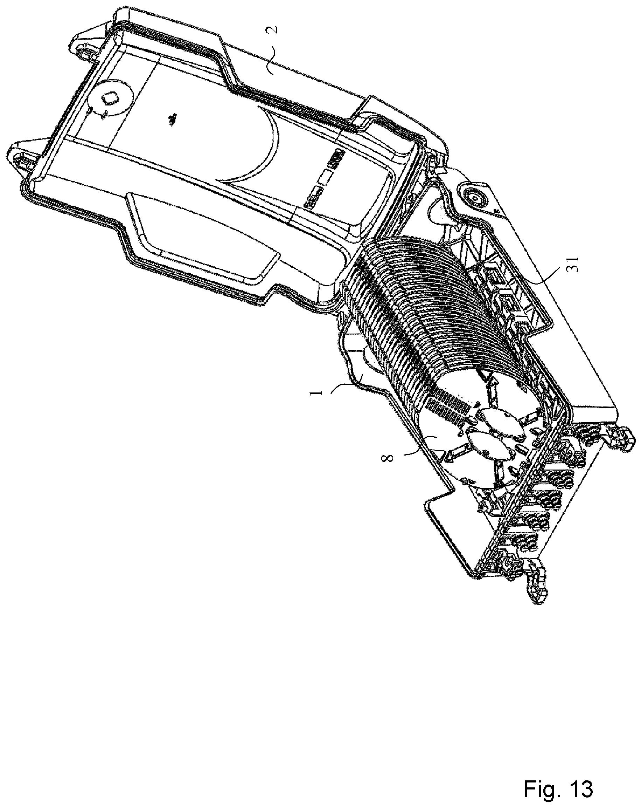

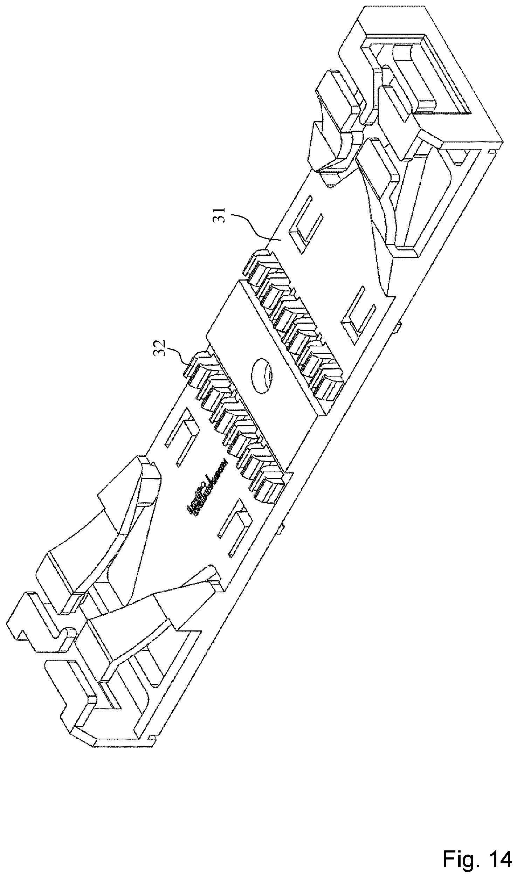

Die Anschlussbox kann in ihrem Innenraum in unterschiedlicher Weise genutzt werden und für verschiedene Anschlussoptionen (Spleiß- und Patchverbindungen) sowie Kabelüberlängen unterschiedlicher Konfigurationen anbieten. Anhand der Figuren 1-12 wird eine sehr flexible Innenausstattung dargestellt und die Figuren 13 und 14 verdeutlichen eine Alternative dazu, die auf eine maximale Zahl von Spleißverbindungen ausgerichtet ist.

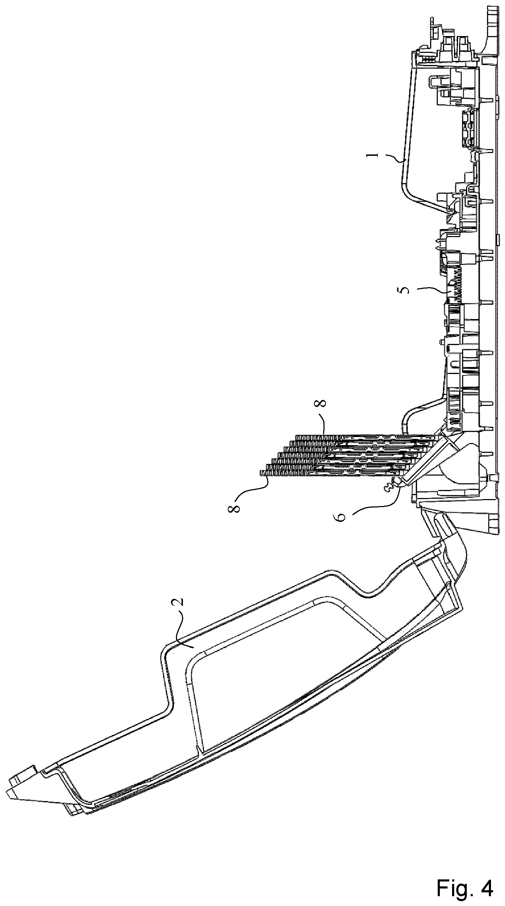

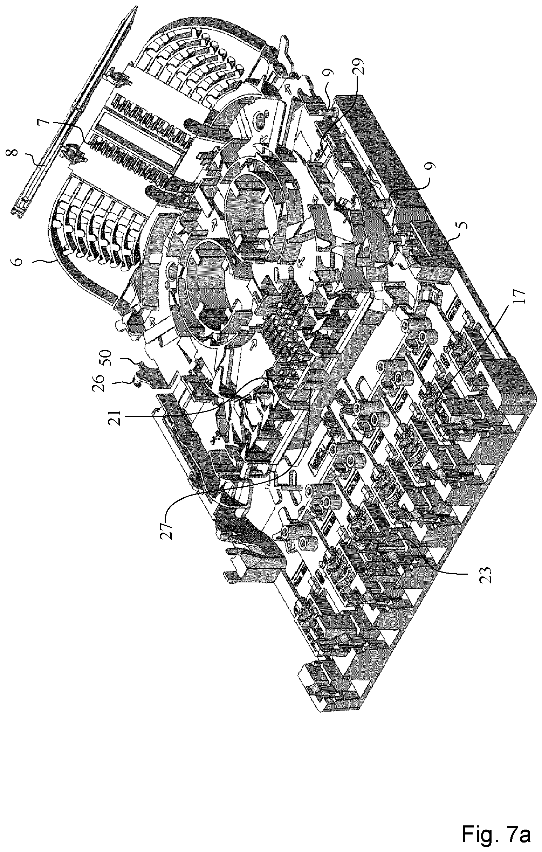

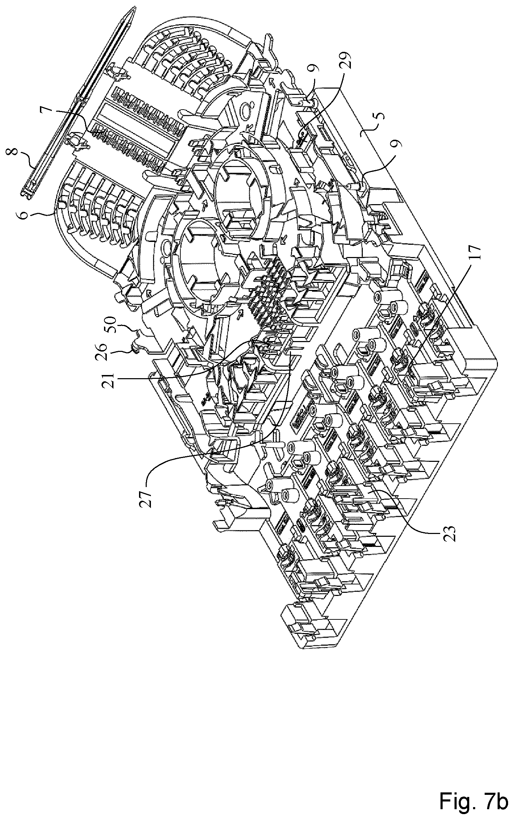

In Figur 1 sieht man bereits ein in das Unterteil 1 eingesetztes Bodenteil 5, das seinerseits in den Figuren 7 einmal mit Grauschattierungen und einmal ohne dargestellt ist. Dieses Bodenteil 5 füllt das Unterteil im Wesentlichen flächig aus und weist an der der Gelenkverbindung zwischen Unterteil 1 und Deckel 2 zugewandten Seite einen schräg aufsteigenden Fortsatz auf, nämlich ein Aufnahmeteil 6 mit schräg übereinanderliegenden Gelenkaufnahmen 7 für in Figur 4 sichtbare Spleißkassetten 8, in diesem Fall maximal sieben Stück. In den Figuren 7 sieht man rechts und links davon Führungen für in die Spleißkassetten achsnah einlaufende oder daraus herauslaufende einzelne Kabel, insbesondere Pigtail-Kabel.

Die Figuren 4 und 7 verdeutlichen miteinander, dass die Spleißkassetten 8 im heruntergeklappten Zustand horizontal liegen und einen hinteren Teil der Strukturen des horizontalen Bereichs des Bodenteils 5 in den Figuren 7 verdecken, während sie im hochgeklappten Zustand gemäß Figur 4 den Zugang dazu erlauben. Außerdem wird natürlich der Zugang zu einzelnen Spleißkassetten 8 ebenfalls durch selektives Hochklappen erreicht.

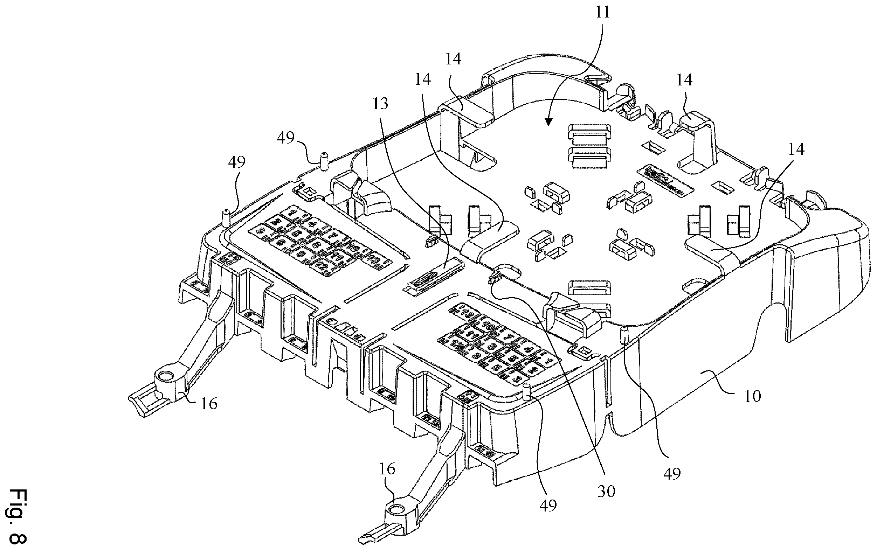

Über dem Aufnahmeteil 6 sieht man in Figuren 7 eine an dem Aufnahmeteil 6 angeformte und horizontal liegende Nadel 8. Diese Nadel 8 kann abgebrochen und mit ihren beiden Enden zum Manipulieren von Kabeln benutzt werden. Wenn sie nicht benötigt wird, so kann sie mithilfe des an ihrem in den Figuren 7 linken Ende sichtbaren Lochs und eines weiteren etwa in ihrer Mitte auf in den Figuren 7 mit 9 bezeichneten vertikalen Stiften am Rand fixiert werden, liegt dann parallel zu dieser Kante des Bodenteils 5 und stört bei anderen Arbeiten nicht. In der dargestellten Form handelt sich um ein mit dem übrigen Bodenteil 5 und dem Aufnahmeteil 6 spritzgusstechnisch integriertes Teil. In analoger Form gilt das für die in Figur 8 mit 49 bezeichneten Stifte an dem im folgenden behandelten Teil 10.

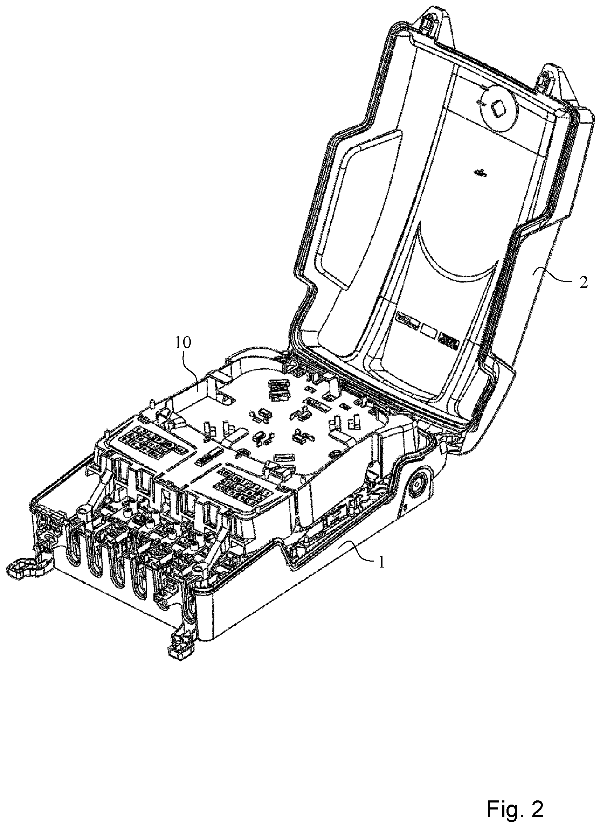

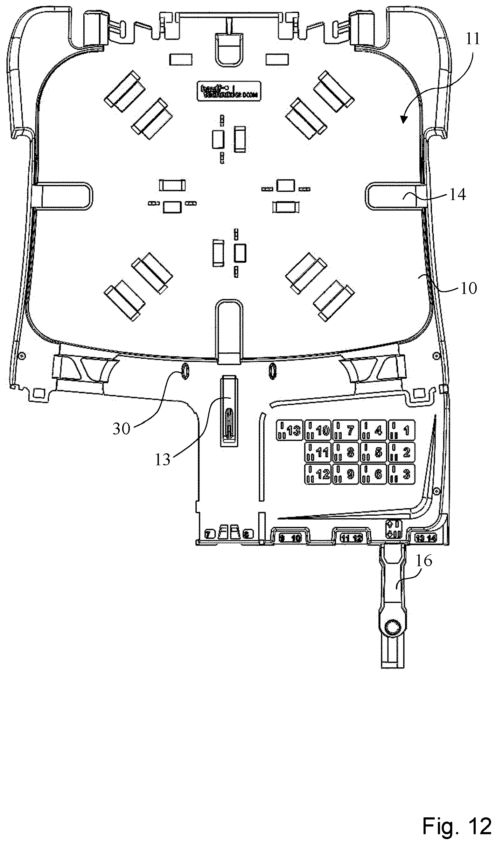

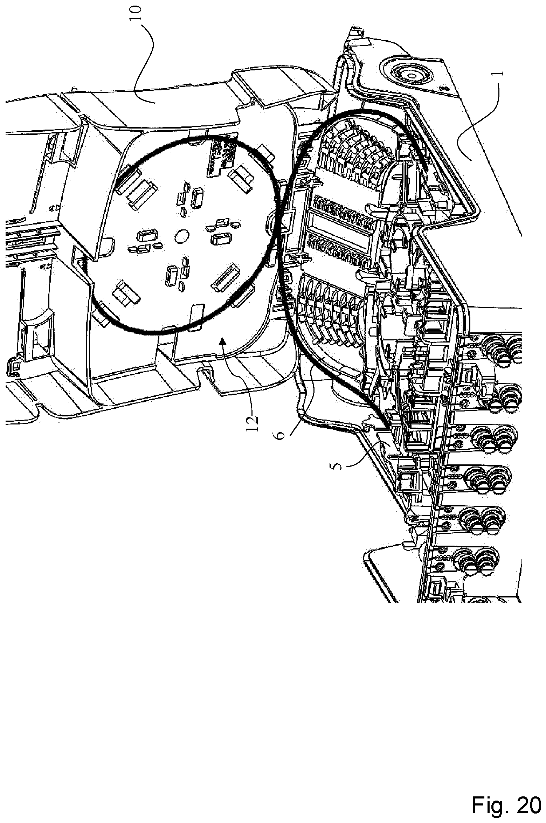

Figur 2 zeigt zusätzlich ein auf dem Bodenteil 5 angeordnetes deckelartiges Teil, nämlich die sog. Montageplatte 10, die einzeln für sich in Figur 8 und in Figur 12 zu sehen ist, wobei in Figur 12 ein vorderer linker Teil an Sollbruchstellen ausgebrochen ist. Diese Montageplatte 10 ist in eine Gelenkaufnahme eingerastet und ähnlich wie der Deckel 2 um eine hintere horizontale Achse klappbar. Im hochgeklappten Zustand erlaubt sie quasi wie in Figur 1 einen Zugang zu dem Bodenteil 5, den etwaigen Spleißkassetten 8 daran etc., vgl. Figur 20. Außerdem kann sie im hochgeklappten Zustand und bei vertikaler Lage der Anschlussbox (anders als in den Figuren 1-4) den hochgeklappten Deckel 2 sichern, sodass ein Monteur diesen nicht festhalten muss und beide Hände frei hat. Dazu ist der Vorsprung 33 (Figur 1) in dem Deckel vorgesehen, unter den die Montageplatte greifen kann. Umgekehrt sichert auch der Deckel 2 die Montageplatte 10.

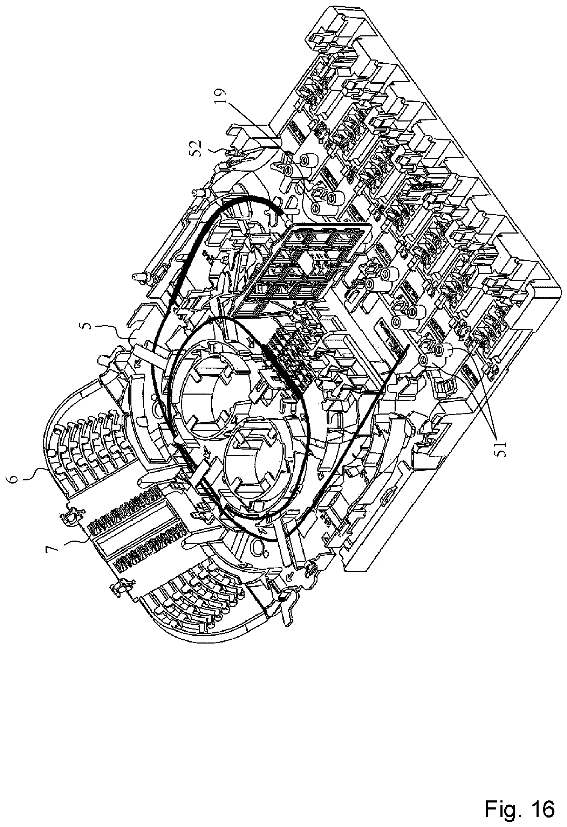

Die Montageplatte 10 enthält bei diesem Ausführungsbeispiel oberseitig und in Figur 8 sichtbar sowie zusätzlich unterseitig und in Figur 20 sichtbar jeweils eine Überlängenablage für Kabel. Die obere ist in Figur 8 mit 11 bezeichnet und die untere in Figur 20 mit 12. Außerdem sieht man in Figur 8 einen Dokumentenhalte-Clip zum Fixieren von Papierdokumenten bei Montagearbeiten zur Dokumentation der vorgenommenen Anschlüsse. Rechts und links davor sieht man Nummernfelder, die die Zuordnung von Nummern zu anhand Figur 16 näher zu erläuternden Patchstellen- bzw. Kupplungspositionen erleichtern.

Ferner erlauben die vier Haken 14 in Figur 8 neben dem Niederhalten abgelegter Kabelüberlängen auch die Halterung eines Kombinationsteils 15, das in den Figuren 9 dargestellt ist. Dieses Kombinationsteil 15 bildet einen integrierten Einbauteile-Satz, quasi ein Teilegitter, aus dem einzelne Einbauteile herausgebrochen werden können. Es kann als Kombinationsteil integral produziert und auch integral gehandhabt und gelagert werden.

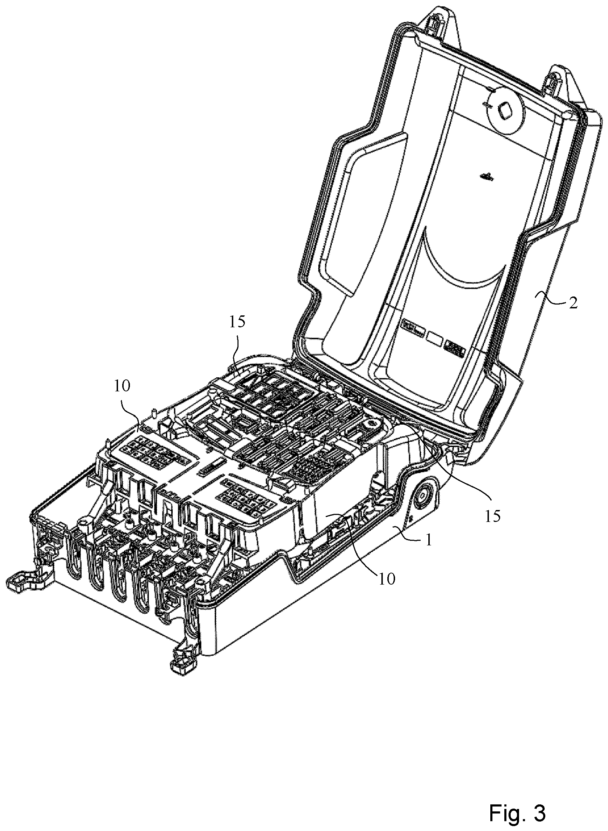

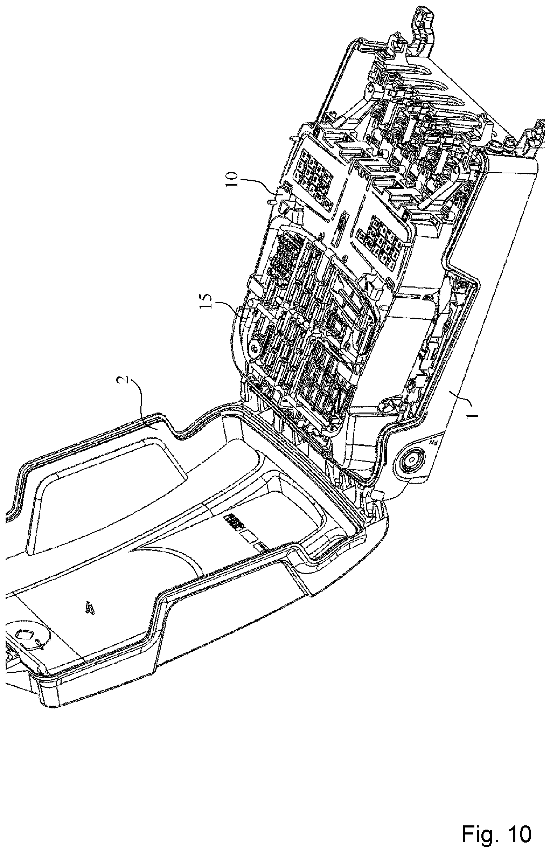

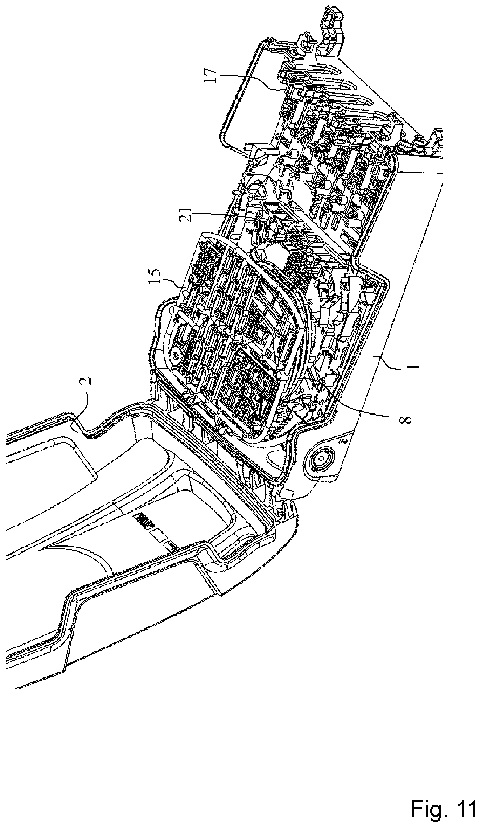

Figur 3 zeigt das Kombinationsteil 15 in der Überlängenablage 11 auf der Oberseite der Montageplatte 10. Wegen seiner begrenzten Dicke kann es auch bei einer begrenzten Zahl darunter liegender Kabel an dieser Stelle verbleiben oder wieder dort abgelegt werden. Alternativ kann es gelenkig eingeclipst werden in die Gelenkaufnahme für die Montageplatte 10, wenn diese nicht montiert sein sollte. Dies ist in Figur 11 im Vergleich zu Figur 10 (mit Montageplatte 10) dargestellt, wobei das Kombinationsteil 15 in Figur 11 genauso hochgeklappt werden kann wie die in Figur 4 in diesem Zustand gezeigten Spleißkassetten 8.

An einer von der Gelenkachse abgewandten Seite, nämlich in Figur 8 links vorne, weist die Montageplatte zwei auskragende Arme 16 mit Schraublöchern an den Enden auf. Sie kann im herunter geklappten Zustand mit deren Hilfe verschraubt werden, wobei die Schrauben in Öffnungen 17 eingeschraubt werden, die in den Figuren 7 und 11 angedeutet sind, vgl. auch Figur 10. Distal von den entsprechenden Löchern der Arme 16 weisen diese Arme außerdem Laschen auf, mit denen alternativ oder zusätzlich eine Verplombung angebracht werden kann.

Dies hat mit der Funktion der Montageplatte 10 als Deckel zu tun. Wie z. B. Figur 10 zeigt, deckt die Montageplatte 10 im herunter geklappten Zustand wesentliche Teile des Bodenteils 5 ab, insbesondere den Stapel aus Spleißkassetten 8 und wesentliche Teile der von dort ausgehenden oder dort einlaufenden Pigtail-Kabel. Vor allem in Zusammenhang mit wählbaren Optionen für Patchstellen bzw. Stecckupplungen sind dabei die gelenkachsenfernen Ecken der Montageplatte 10 ausbrechbar, vgl. Figur 12, sodass dort Patchkabel manipuliert werden können, die in einem noch zu erläuternden Kupplungshalter 19 ein- und ausgesteckt werden können. Von dem Kupplungshalter 19 ausgehende Pigtail-Kabel können dann unter der noch bestehenden Ecke hindurch geführt werden. Natürlich können auch beide Ecken ausgebrochen werden, etwa um viele Kupplungshalter 18 eines anderen Typs unterzubringen.

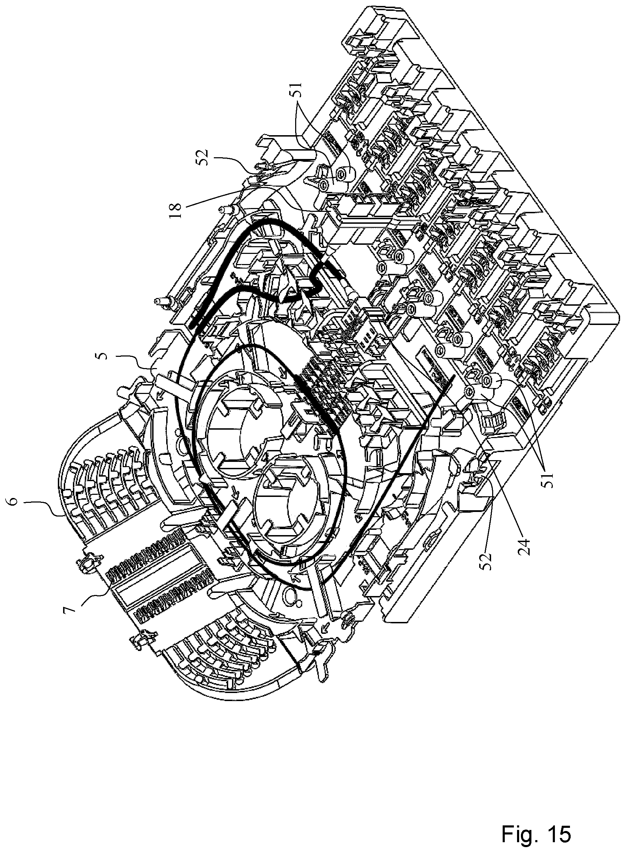

Die entsprechenden Kupplungshalter 18, 19 sind Teile des Kombinationsteils 15 in den Figuren 9, wobei es einen ersten Typ Kupplungshalter 18 gibt, der bei diesem Ausführungsbeispiel für eine lokale Leitungsrichtung der entsprechenden gekuppelten Leitungen entlang der Längsrichtung der Anschlussbox ausgelegt ist, vgl. Figur 15. Es gibt sieben entsprechende Positionen dafür, wobei in Figur 15 die dritte von rechts gewählt ist. Ein solcher Kupplungshalter 18 enthält zwei übereinanderliegende Öffnungen für jeweils eine Duplexkupplung, sodass also pro Kupplungshalte 18 maximal vier Einzelfasern gepatcht werden können. Im heruntergeklappten Zustand der Montageplatte 10 sind die Kupplungshalter 18 in allen sieben Positionen von dieser oberseitig gehalten und für Patchkabel von vorne zugänglich. Dazu muss keine Ecke der Montageplatte 10 ausgebrochen werden. Das Kombinationsteil 15 weist sechs solche Kupplungshalter 18 auf.

Ferner gibt es einen zweiten Typ, nämlich einen Matrix-Kupplungshalter 19, zu dem auf Figur 16 verwiesen wird. Diese Matrix 19 kann mit einer im Querschnitt quadratischen Achse 20 in einen Aufnahmebereich 21 (vgl. Figuren 7 und 11) eingeclipst werden und ist in diesem Zustand (bei hochgeklappter Montageplatte 10) aus der in Figur 16 dargestellten Position um etwa 90° nach links klappbar, um im Bedarfsfall Platz zu schaffen. In der Matrix 19 finden maximal 13 Duplexkupplungen Platz, wobei, wie schon erwähnt, zur Zugänglichkeit der Patchkabel (in Figur 16 nicht eingezeichnet, aber dort nach links vorne weisend) eine der beiden Ecken der Montageplatte 10, im Fall der Figur 16 die linke, ausgebrochen werden sollte. Andererseits verdeckt die verbleibende Ecke gemeinsam mit der restlichen Montageplatte 10 die Pigtail-Kabel, vgl. Figur 16 mit den Figuren 10 und 12.

Generell dient die Montageplatte 10 im heruntergeklappten Zustand zur Fixierung der Kupplungshalter 18 und 19; in beiden Fällen greifen die oberen Bereiche der Kupplungshalter 18 und 19 in entsprechende Aufnahmen in der Montageplatte 10 ein und werden dadurch auch oberseitig stabilisiert.

Zusätzlich gibt es einen zusätzlichen Kupplungshalter 24, der analog zu der Matrix 19 eine 13. Duplexkupplung zulässt. Dieser "13. Kupplungshalter" 24 kann an einer in den Figuren 7 mit 27 bezeichneten Stelle befestigt werden, vgl. Figur 15. Eine 13. Kupplung kann z. B. für einen separaten Gebäudeanschluss von Interesse sein und ist deswegen sowohl bei den in Längsrichtung verlaufenden als auch bei den quer dazu verlaufenden Kupplungsoptionen möglich.

Die hier erwähnten Duplexkupplungen vom Typ LC können auch durch Einfachkupplungen vom Typ SC oder E2000 ersetzt werden, was die Zahl der maximal verbindbaren Kabel halbiert.

Ferner zeigen die Figuren 9 ein Werkzeug 21 zum Lösen von Steckverbindungen, das an sich bekannt, hier aber besonders praktisch integriert ist. Mit 22 ist ein (in einem in den Figuren 7 mit 22 bezeichneten Bereich) rastend einsteckbares "Schlossblech" bezeichnet, das im eingesteckten Zustand ein Gegenlager für den Riegel des bereits erwähnten Deckelschlosses bildet, und zwar mit der etwas verbreiterten Flanke links neben seiner in den Figuren 9 deutlich sichtbaren großen Öffnung.

Das Werkzeug 21 kann übrigens an einem in den Figuren 7 mit 26 bezeichneten Haken befestigt werden, und zwar mithilfe der in den Figuren 9 erkennbaren ovalen Öffnung darin. Nach Drehen um 90° hängt das Werkzeug 21 dann an dem Haken 26 fest. Außerdem hat der Haken 50 rechts neben dem Haken 26 bei vertikal montierter Anschlussbox die Funktion, gerade nicht benötigte lose Kabel zur Seite "weg hängen" zu können. Alternative Halterungsmöglichkeiten für das Werkzeug sind in Figur 8 mit 30 bezeichnet.

Ferner gibt es einen Halter 25 für Spleißschutzeinrichtungen.

Schließlich enthält das Kombinationsteil 15 Klemmelemente 28 zur Montage an in den Figuren 7 mit 29 bezeichneten Stellen, mit denen in diesem sogenannten Absetzbereich Pigtail-Kabel mit nicht eingezeichneten Moosgummielementen und den Klemmelementen 28 geklemmt werden können.

Unter der Montageplatte 10, und zwar drehachsennäher als die besprochenen ausbrechbaren Ecken der Montageplatte 10, befindet sich ein durch die Anschlussplatte 10 effizient geschützter Bereich, der bisher im Wesentlichen in Zusammenhang mit der Aufnahme des Stapels Spleißkassetten 8 (vgl. Figur 4) besprochen wurde. Der Stapel der an dem Aufnahmeteil gelenkig gehaltenen Spleißkassetten 8 bildet dabei einen Anschlussbereich, wobei in der an sich bekannten Weise in den Spleißkassetten neben Spleißstellenablagen auch für die jeweils beteiligten Kabel eine Überlängenablage vorgesehen ist.

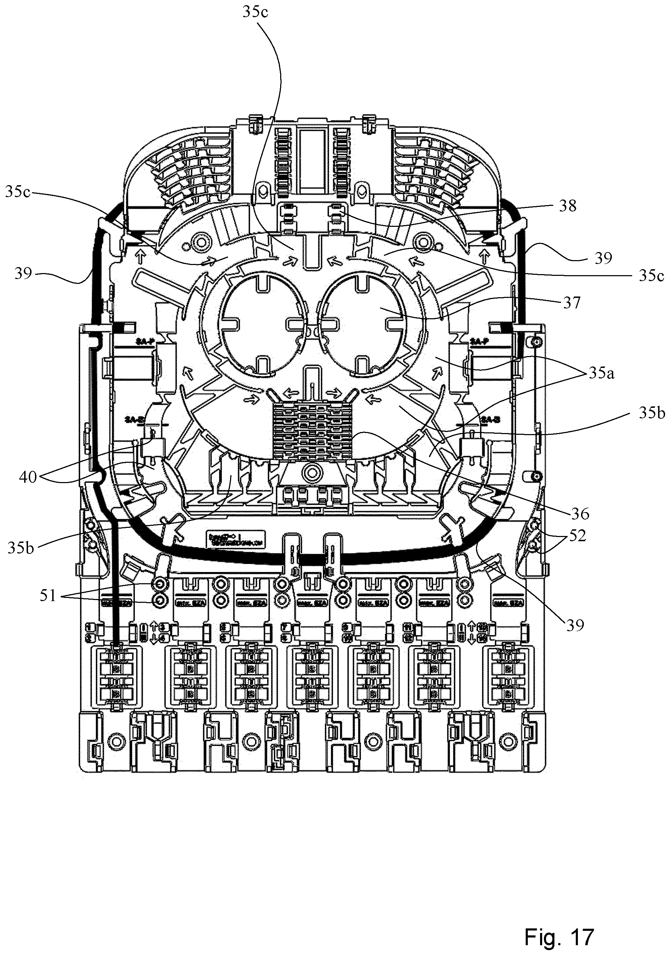

Unter dem Anschlussbereich ist in dem Bodenteil 5 eine in Draufsicht (etwa Figur 15) durchaus einer Spleißkassette ähnelnde Struktur vorgesehen, die allerdings eine erheblich größere Höhe aufweist und hier als "Mixer" bezeichnet wird. Insbesondere gibt es dort eine z. B. in den Figuren 15 und 16 für die eingezeichneten Kabel genutzte Überlängenablage 35a, b, c (Figur 17) und einen Ablagebereich 36 für Spleißstellen, in dem in den Figuren 15 und 16 ebenfalls eine beispielhafte Spleißschutzeinrichtung abgelegt ist. Wegen der größeren verfügbaren Bauhöhe kann die Spleißstellenablage 36 im Unterschied zu denen in den Spleißkassetten 8 doppelstöckig ausgeführt sein. Das ist der Hintergrund für das Teil 25 in dem Teilegitter/Kombinationsteil 15 aus den Figuren 9. Dieses Teil 25 bildet die obere Ebene, während in den Figuren 7 die untere Ebene zu sehen ist.

Die größere Bauhöhe erlaubt die Ablage dickerer Kabel, insbesondere in größerer Zahl von Wicklungen oder Kabeln und zwar insbesondere in den äußeren Bereichen 35b (unten) und 35c (oben) für nicht direkt einer Spleißstelle zuzuführende Wicklungen. Dort können z. B. 100 Kabelwicklungen bei 0,9 mm Stärke untergebracht werden.

Ferner können in den innersten Bereichen 37 (Figur 17) auch Überlängen nicht genutzter Pigtail-Kabel abgelegt werden. Da diese nicht genutzt sind, kommt hier auch ein Aufwickeln mit relativ kleinem Krümmungsradius in Betracht. Die Ablagen 37 sind zu diesem Zweck noch tiefer ausgeführt, was man z. B. in den Figuren 7 erkennen kann. Schließlich gibt es gewissermaßen auf der zu der Spleißstellenablage 36 entgegengesetzten und damit gelenkachsennahen Seite noch einen Aufnahmebereich 38 für relativ dicke Bauteile wie Filter oder Splitter, die in den Spleißkassetten selbst keinen Platz finden würden.

Im Sinn der Grundfläche außerhalb und im Sinn der Höhe unterhalb (abgesehen vom Boden der Ablagen 37) des Mixers gibt es eine weitere Überlängenablage, die anhand des dicken Kabels 39 in Figur 17 erkennbar ist und noch erläutert wird. Hier wird mit dem Kabel 39 die zuvor beschriebene Struktur quasi umwickelt.

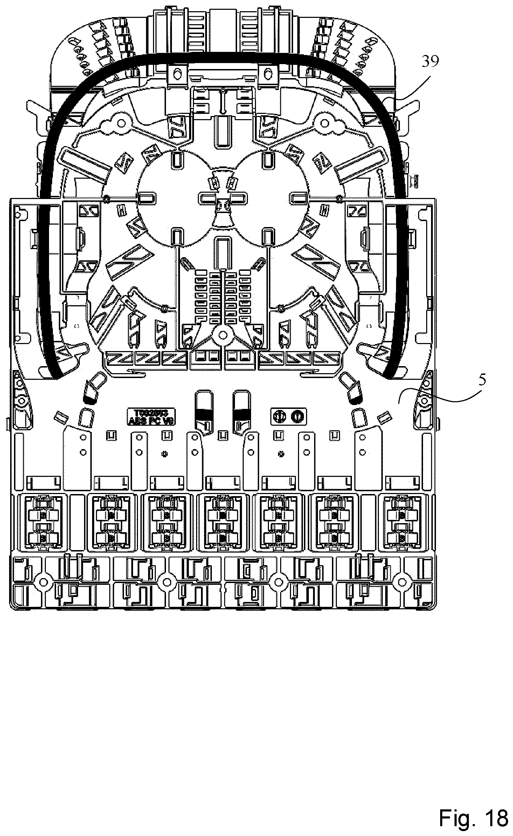

Der in Figur 10 rechts von der Montageplatte nicht nach oben abgedeckte Teil des Bodenteils 5 soll im Rahmen dieses Ausführungsbeispiels nicht im Detail erläutert werden. Zusammengefasst geht es hier (im Sinn der Figur 10 von rechts nach links) um das abgedichtete Einführen und Hinausführen von unterschiedlichen Kabeln durch die in den Figuren 1-3 und 6 deutlich erkennbaren vorderseitigen U-Öffnungen in dem Unterteil 1 und entsprechende Elastomerdichtungen darin (eine davon ist in Figur 10 ganz vorne angedeutet, in Figur 17 und 18 weitere). In einer Ebene direkt dahinter / links davon können die Kabel umgebende Hüllen oder Röhren mit Kabelbindern und zu deren Fixierung vorgesehenen Bauteilen geklemmt werden. Ferner finden sich noch weiter links verschiedene Schraubdome zur Befestigung von Aramid-Fasern, die in an sich bekannter Weise der Zugentlastung von Bündelkabeln dienen. Zu diesen Elementen wird auf die parallel eingereichten weiteren Anmeldungen der Anmelderin verwiesen.

Bevor die Möglichkeiten der bisher dargestellten Ausgestaltung näher erläutert werden, soll anhand der Figuren 13 und 14 kurz die Flexibilität der Anschlussbox in anderer Weise dargestellt werden. In Figur 13 sind (Figur 4 an sich entsprechende) Spleißkassetten 8, jedoch in deutlich größerer Zahl, an auf dem Unterteil 1 befestigten Halterungen 31 mit dem Bezugszeichen 7 in den Figuren 7 ungefähr entsprechenden Gelenkaufnahmen 32 klappbar befestigt. Die Befestigungen 31 sind jeweils auf dem Unterteil 1 aufgeschraubt. Sie zeigen in Figur 14 rechts und links von den Gelenkaufnahmen 32 übliche Kabelniederhalter. In dieser Form kann die Anschlussbox statt der Verwendung des Bodenteils 5 und der übrigen darauf aufbauenden Teile zur Unterbringung einer maximalen Zahl von Spleißverbindungen benutzt werden.

Typischerweise werden zum Einführen eines Bündelkabels die beiden äußersten der bereits mehrfach erwähnten U-förmigen Öffnungen in der Vorderseite des Unterteils 1 verwendet, wobei dies mit oder ohne vorheriges Montieren eines Leerrohres und erst späteres Einblasen geschehen kann. Das Kabel oder das Leerrohr wird durch Klemmen fixiert. Ein durch ein Leerrohr geführtes Kabel kann z. B. mit einer an sich bekannten EZA (Einzelzugabdichtung) auf das Leerrohr abgedichtet werden, was insbesondere an einzelnen der in Figur 15 erkennbaren Plätze für die mögliche Montage eines Kupplungshalters 18 (statt dessen Montage) geschehen kann. Ferner kann eine Zugentlastung durch Festklemmen von Zugentlastungselementen im Kabel oder Bündelkabel an Schraubdomen erfolgen. Bei den inneren Plätzen betrifft das in der Regel dünnere Kabel und Aramid-Garn darin, welches an einem der Schraubdome 51 (Figur 15-17) fixiert werden kann. Bei den äußeren Plätzen betrifft es in der Regel dickere Kabel mit steifen Zentralelementen und Schraubklemmungen in den in Figur 15-17 mit 52 bezeichneten Bereichen.

Zu den Einzelheiten der Abdichtung (mit in den Figuren teilweise sichtbaren Elastomer-Dichtelementen) und Klemmung wird auf zwei parallel zu dieser Anmeldung von derselben Anmelderin eingereichte europäische Patentanmeldungen verwiesen, die diesen Teil im Einzelnen betreffen.

Dann kann eine Überlänge des Bündelkabels abgelegt werden, und zwar gemäß Figur 17, die eine Draufsicht auf das Bodenteil 5 zeigt. Dort sieht man ein als dicke schwarze Linie eingezeichnetes Bündelkabel 39, das links unten eintritt (Details zur Dichtung, Klemmung und EZA sind weggelassen) und relativ weit außen und insbesondere unter dem Aufnahmeteil 6 (vgl. die Figuren 4 und 7) umläuft. Dies kann mehrfach erfolgen, wobei das "Bündelkabel" 39 hier typischerweise bereits ein Bündel einzelner Kabel ist und seinen gemeinsamen Mantel kurz "stromabwärts" von der EZA verloren hat. Bei Bedarf könnte ein Teil der Kabel aus dem Bündel, der nicht unterbrochen und Anschlüssen in der Anschlussbox zugeführt werden soll, quasi spiegelbildlich zu dem Eintritt (links unten) dann auf der rechten Seite nach unten wieder aus der Anschlussbuchse herausgeführt werden, was in Figur 17 nicht eingezeichnet ist. Bei diesem Beispiel können in dem mit 37 bezeichneten Bereich 70 Wicklungen bei 1,2 mm Stärke abgelegt werden.

Z. B. im Hinblick auf den in Figur 17 unten quer verlaufenden Teil des Kabels 39 kann die zuvor bereits erwähnte Klappbarkeit der Matrix 19 aus Figur 16 vorteilhaft sein. Diese Matrix 19 kann nämlich hochgeklappt werden, um in diesem Bereich Wicklungen legen oder wegnehmen zu können.

Figur 18 verdeutlicht die Erläuterungen zu Figur 17, in dem sie den Verlauf des Kabels 39 von unten zeigt, also aus der Perspektive des Unterteils 1.

Figur 17 zeigt ferner einen dort mit 40 bezeichneten Einführbereich, in dem zumindest Teile des behandelten Bündelkabels 39 in den sogenannten Mixer mit seiner Überlängenablage 35, der Spleißstellenablage 36 etc. eingeführt und dabei in der Höhe etwas angehoben werden können. Einer spiegelbildliche und analoge Struktur gibt es auf der rechten Seite, in Figur 17 nicht beziffert, zum "Absetzen", d. h. Herausführen aus diesem Bereich in die Ebene darunter. Natürlich können Kabel auch direkt von einer EZA durch diesen Einführbereich 40 geführt werden. Typischerweise werden dort in (oder gleich stromabwärts von) dem Einführbereich 40 an einer Moosgummiklemmung verbleibende Schutzmäntel entfernt und die Einzelfasern freigelegt. Diese Einzelfasern werden dann in dem sogenannten Mixer oder, typischerweise nach einer Umrundung dort, in einer der Spleißkassetten 8 darüber angeschlossen.

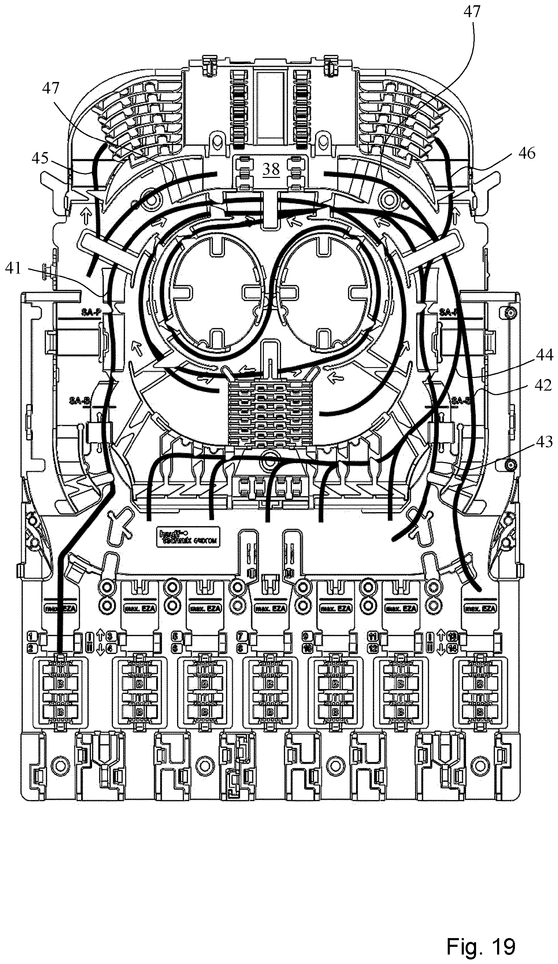

Figur 19 zeigt diese alternative Kabelführung, wobei das Kabel hier das Bezugszeichen 41 trägt. Im rechten Bereich der Figur 19 sind aus dem Mixer auslaufende Kabel dargestellt, wobei das rechteste die Nummer 42 trägt und andeutet, dass ein Kabel ganz rechts unten wieder aus der Anschlussbox herausgeführt werden kann (analog zur Einführung links unten). Ein weiteres Kabel 43 zeigt eine mögliche Zuführung zu Patchstellen/Kupplungen in der in Figur 16 dargestellten Matrix 19, also mit quer zur Längsrichtung (und in Figur 19 horizontal) verlaufender lokaler Leitungsrichtung an der Kupplung.

44 bezeichnet beispielhafte Verläufe in Richtung zu Kupplungspositionen wie in Figur 15 mit entsprechenden Kupplungshaltern 18.

Oben in Figur 19 sieht man links mit 45 und rechts mit 46 auf die Spleißkassetten 8 zulaufende bzw. davon herkommende Kabelverläufe.

Schließlich bezeichnet 47 einen Kabelverlauf zu dem bereits erwähnten Aufnahmebereich 38 für Splitter oder Filter.

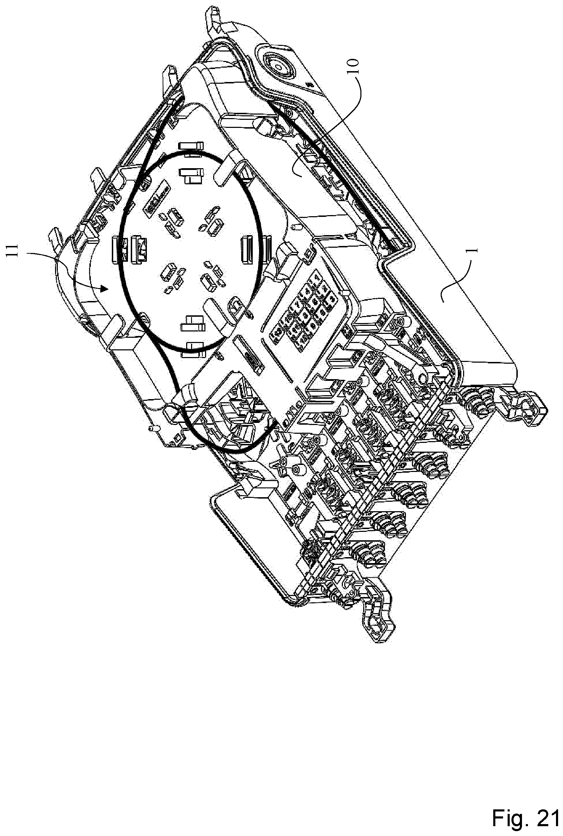

Figur 20 und Figur 21 geben Beispiele für Kabelführungen zu den beiden Überlängenablagen 11 und 12 der Montageplatte 10. In Figur 20 ist dies für die unterseitige Überlängenablage 12 dargestellt und in Figur 21 für die oberseitige Überlängenablagen 11. Man erkennt, dass in beiden Fällen erhebliche Volumina für dicke oder viele Kabel zur Verfügung stehen. Diese können bei Bedarf auch mit Kabelbindern oder anderweitig fixiert werden. In Figur 20 handelt es sich um ein von der Vorderseite des Unterteils 1 einlaufendes und rechts wieder zur Vorderseite auslaufendes ununterbrochenes Kabel, z. B. einen durchlaufenden Teil eines Kabelstrangs, dessen anderer Teil in der Anschlussbox angeschlossen wird. In Figur 21 handelt es sich um ein links von einem Kupplungsplatz in der Matrix 19 (Figur 16) ausgehendes Patchkabel, das ebenfalls dann weiter rechts zur Vorderseite des Unterteils 1 verläuft.

Kabel können auch von hinten auf die Montageplatte 10 und deren oberseitige Überlängenaufnahme 11 geführt werden, also quasi spiegelbildlich zu dem in Figur 21 rechts aus der Überlängenablage 11 herauslaufenden Kabel.

Die in Figur 20 dargestellte Möglichkeit der Unterbringung von Kabelüberlängen in der Überlängenablage 12 ist hinsichtlich ihres Volumens davon abhängig, ob und wie viele Spleißkassetten 8 verwendet werden, weil diese ebenfalls Bauraum in diesem Bereich unter der Montageplatte 10 benötigen. Das gilt auch umgekehrt für eine ebenfalls mögliche Überlängenablage auf dem Mixer, die nicht gezeichnet ist. Dort können an verschiedenen Stellen Kabelbinder befestigt werden, sodass das Volumen auch unabhängig von der Montageplatte 10 für die Überlängenablage zur Verfügung steht. Dabei würden die abgelegten Überlängen allerdings nicht einfach mit hochgeklappt, um den Zugang zu Strukturen darunter zu erleichtern.

## Patentansprüche

1. Glasfaser-Anschlussbox mit
einem Gehäuse und
einem Anschlussbereich darin, welcher Spleißstellenablagen und/oder Patchstellen aufweist,
wobei unter dem Anschlussbereich ein Bodenteil mit einer Überlängenablage für bis zu mindestens zehn Glasfaserkabel mit einer Stärke von jeweils mindestens 0,5 mm vorgesehen ist.

2. Anschlussbox nach Anspruch 1 mit einem Aufnahmeteil in dem Anschlussbereich, welcher Aufnahmeteil ausgelegt ist zur Aufnahme mindestens einer klappbaren Spleißkassette, welche mindestens eine Spleißstellenablage und eine Überlängenablage für ein Glasfaserkabel aufweist und zum Zugang zu der Überlängenablage in dem Bodenteil aufgeklappt werden kann.

3. Anschlussbox nach Anspruch 2, bei welcher der Aufnahmeteil zur Aufnahme eines Stapels klappbarer Spleißkassetten ausgelegt ist, wobei die verfügbare Höhe auf einer Spleißkassette in dem Stapel kleiner als die verfügbare Höhe der Überlängenablage des Bodenteils ist.

4. Anschlussbox nach einem der vorstehenden Ansprüche, bei welcher der Bodenteil eine Aufnahmeeinrichtung für Filter und/oder Splitter aufweist.

5. Anschlussbox nach einem der vorstehenden Ansprüche, bei welcher der Bodenteil Ausnehmungen zur Aufnahme nicht genutzter Steckverbindungselemente, insbesondere mit Pigtail-Kabeln, aufweist.

6. Anschlussbox nach einem der vorstehenden Ansprüche, bei welcher der Bodenteil und vorzugsweise auch der Aufnahmeteil nach Anspruch 2 von dem Gehäuse separat vorgesehen und in dem Gehäuse der Anschlussbox gehalten und/oder in das Gehäuse einsetzbar sind.

7. Anschlussbox nach Anspruch 6 mit einer Überlängenablage für Strangkabel mit einer Stärke von mindestens 0,8 mm außerhalb des Bodenteils und zwischen dem Bodenteil und dem Gehäuse.

8. Anschlussbox nach einem der vorstehenden Ansprüche mit einer in dem Gehäuse relativ zu dem Gehäuse klappbar montierbaren oder montierten Montageplatte, welche Montageplatte eine Überlängenablage für Glasfaserkabel aufweist, vorzugsweise je eine auf jeder Seite der Montageplatte.

9. Anschlussbox nach einen der vorstehenden Ansprüche mit einem Einbauteile-Satz als zumindest ein einstückiges, vorzugsweise spritzgegossenes Kombinationsteil mit einer Mehrzahl zusammenhängender Einbauteile, welche Einbauteile aus dem Kombinationsteil abtrennbar sind

10. Verwendung einer Anschlussbox nach einem der vorstehenden Ansprüche zur Ablage eines Glasfaserkabels mit einer Stärke von mindestens 0,5 mm in der Überlängenablage dafür unter dem Anschlussbereich.

11. Verwendung nach Anspruch 10 einer Anschlussbox nach Anspruch 4 zur Ablage eines Splitters mit einer daran vorgesehenen Mehrzahl Kabel mit einer jeweiligen Stärke von mindestens 0,5 mm in der Aufnahmeeinrichtung für den Splitter bzw. in der Überlängenablage unter dem Anschlussbereich.

12. Verwendung einer Anschlussbox nach Anspruch 2, optional auch in Kombination mit einem weiteren der Ansprüche 1-9 und optional mit einer Verwendung nach Anspruch 10 oder 11, unter Weglassung der klappbaren Spleißkassetten und zur Ablage einer Überlänge zumindest eines Kabels in dem durch die Weglassung verfügbaren Volumen in der Anschlussbox über dem Bodenteil.

13. Verwendung nach Anspruch 12 zur Ablage zumindest eines vorkonfektionierten Strangkabels mit mindestens sechs Einzelfasern darin und einer Stärke von mindestens 3 mm.

14. Verwendung einer Anschlussbox nach Anspruch 7, optional auch in Kombination mit einem weiteren der Ansprüche 1-9 und optional mit einer Verwendung nach einem der Ansprüche 10-13 zur Ablage einer Überlänge eines Strangkabels mit mindestens drei Bündeln mit jeweils mindestens sechs Einzelfasern in der Überlängenablage außerhalb des Bodenteils.

15. Verwendung einer Anschlussbox nach Anspruch 8, optional auch in Kombination mit einem weiteren der Ansprüche 1-9 und optional mit einer Verwendung nach einem der Ansprüche 10-14 zur Ablage eines Kabels in der Überlängenablage auf einer Seite der Montageplatte.

## Geänderte Patentansprüche

### Geänderte Patentansprüche gemäss Regel 137(2) EPÜ.

1. Glasfaser-Anschlussbox mit
einem Gehäuse (1, 2) und
einem Anschlussbereich darin, welcher Spleißstellenablagen aufweist, wobei unter dem Anschlussbereich ein Bodenteil (5) mit einer Überlängenablage (35a, b, c) für bis zu mindestens zehn Glasfaserkabel (39) mit einer Stärke von jeweils mindestens 0,5 mm vorgesehen ist,
und mit einem Aufnahmeteil (6) in dem Anschlussbereich, welcher Aufnahmeteil (6) zur Aufnahme eines Stapels klappbarer Spleißkassetten (8) ausgelegt ist, welche jeweils mindestens eine Spleißstellenablage und eine Überlängenablage für ein Glasfaserkabel aufweisen und zum Zugang zu der Überlängenablage (35a, b, c) in dem Bodenteil (5) aufgeklappt werden können,
wobei die verfügbare Höhe auf einer Spleißkassette (8) in dem Stapel kleiner als die verfügbare Höhe der Überlängenablage (35a, b, c) des Bodenteils (5) ist,
**dadurch gekennzeichnet, dass** der Bodenteil (5) und der Aufnahmeteil (6) von dem Gehäuse (1, 2) separat vorgesehen und in dem Gehäuse (1, 2) der Anschlussbox gehalten und/oder in das Gehäuse (1, 2) einsetzbar sind, und durch eine Überlängenablage (35a, b, c) für Strangkabel mit einer Stärke von mindestens 0,8 mm außerhalb des Bodenteils (5) und seitlich neben dem Bodenteil (5) und dabei zwischen dem Bodenteil (5) und dem Gehäuse (1, 2).

2. Anschlussbox nachAnspruch 1, bei welcher der Bodenteil (5) eine Aufnahmeeinrichtung (38) für Filter und/oder Splitter aufweist.

3. Anschlussbox nach einem der vorstehenden Ansprüche, bei welcher der Bodenteil (5) Ausnehmungen (37) zur Aufnahme nicht genutzter Steckverbindungselemente, insbesondere mit Pigtail-Kabeln, aufweist.

4. Anschlussbox nach einem der vorstehenden Ansprüche mit einer in dem Gehäuse (1, 2) relativ zu dem Gehäuse (1, 2) klappbar montierbaren oder montierten Montageplatte (10), welche Montageplatte (10) eine Überlängenablage (11, 12) für Glasfaserkabel aufweist, vorzugsweise je eine auf jeder Seite der Montageplatte (10).

5. Anschlussbox nach einen der vorstehenden Ansprüche mit einem Einbauteile-Satz als zumindest ein einstückiges, vorzugsweise spritzgegossenes Kombinationsteil (15) mit einer Mehrzahl zusammenhängender Einbauteile, welche Einbauteile aus dem Kombinationsteil (15) abtrennbar sind

6. Verwendung einer Anschlussbox nach einem der vorstehenden Ansprüche zur Ablage eines Glasfaserkabels (39) mit einer Stärke von mindestens 0,5 mm in der Überlängenablage (35a, b, c) dafür unter dem Anschlussbereich.

7. Verwendung nach Anspruch 6 einer Anschlussbox nach Anspruch 3 zur Ablage eines Splitters mit einer daran vorgesehenen Mehrzahl Kabel mit einer jeweiligen Stärke von mindestens 0,5 mm in der Aufnahmeeinrichtung (38) für den Splitter bzw. in der Überlängenablage (35a, b, c) unter dem Anschlussbereich.

8. Verwendung einer Anschlussbox nach einem der Ansprüche1-5 und optional mit einer Verwendung nach Anspruch 6 oder 7, unter Weglassung der klappbaren Spleißkassetten (8) und zur Ablage einer Überlänge zumindest eines Kabels in dem durch die Weglassung verfügbaren Volumen in der Anschlussbox über dem Bodenteil (5).

9. Verwendung nach Anspruch 8 zur Ablage zumindest eines vorkonfektionierten Strangkabels mit mindestens sechs Einzelfasern darin und einer Stärke von mindestens 3 mm.

10. Verwendung einer Anschlussbox nach einem der Ansprüche 1-5 und optional mit einer Verwendung nach einem der Ansprüche 6-9 zur Ablage einer Überlänge eines Strangkabels mit mindestens drei Bündeln mit jeweils mindestens sechs Einzelfasern in der Überlängenablage außerhalb des Bodenteils (5).

11. Verwendung einer Anschlussbox nach Anspruch 4, optional auch in Kombination mit einem weiteren der Ansprüche 1-5 und optional mit einer Verwendung nach einem der Ansprüche 6-10zur Ablage eines Kabels in der Überlängenablage (11, 12) auf einer Seite der Montageplatte (10).
